Europäisches Patentamt

European Patent Office

Office européen des brevets

(19)

(11) Veröffentlichungsnummer : **0 395 589 B1**

(12) **EUROPÄISCHE PATENTSCHRIFT**

(45) Veröffentlichungstag der Patentschrift :
**11.11.92 Patentblatt 92/46**

(51) Int. Cl.$^5$ : **H02P 1/42**

(21) Anmeldenummer : **90810316.1**

(22) Anmeldetag : **20.04.90**

(54) Verfahren und Vorrichtung zum Begrenzen von Stromspitzen.

(30) Priorität : **28.04.89 CH 1632/89**

(43) Veröffentlichungstag der Anmeldung :
**31.10.90 Patentblatt 90/44**

(45) Bekanntmachung des Hinweises auf die
Patenterteilung :
**11.11.92 Patentblatt 92/46**

(84) Benannte Vertragsstaaten :
**AT CH DE FR GB IT LI NL**

(56) Entgegenhaltungen :
**DE-A- 3 110 308**
**FR-A- 2 440 727**
**US-A- 4 431 958**

(56) Entgegenhaltungen :
**PATENT ABSTRACTS OF JAPAN vol. 5, no. 78**
**(E-58)(750) 22 Mai 1981, & JP-A-56 025389 (**
**CONTROL ENGINEERING. vol. 29, no. 4, März**
**1982, NEW YORK US Seiten 76 - 78; D. KER-**
**VIN: "ZERO-CROSSING TRIAC DRIVERS SIM-**
**PLIFYCIRCUIT DESIGN"**

(73) Patentinhaber : **Weigel, Roland**
**Kramenwiesstrasse 14**
**CH-9652 Neu St. Johann (CH)**

(72) Erfinder : **Weigel, Roland**
**Kramenwiesstrasse 14**
**CH-9652 Neu St. Johann (CH)**

(74) Vertreter : **Hepp, Dieter et al**
**Hepp, Wenger & Partner AG Marktgasse 18**
**CH-9500 Wil (CH)**

EP 0 395 589 B1

## Beschreibung

Die Erfindung betrifft eine Vorrichtung und ein Verfahren zum Begrenzen von Stromspitzen beim Ein schalten eines Wechselstrom-Verbrauchers gemäss Oberbegriff von Anspruch 1 und Anspruch 9 sowie die Verwendung eines Heissleiters zum Begrenzen von Schaltstromspitzen. Die Begrenzung des Anlauf stroms von induktiven oder kapazitiven Verbrauchern ist ein altbekanntes Problem, dessen Lösung auf die verschiedenste Weise angestrebt wird. In der Regel wird während der Anlaufphase ein zusätzlicher An lauf-Widerstand verwendet, welcher die Stromauf nahme begrenzt. Aehnliche Massnahmen sind beim Abschalten bekannt, um Strom- oder Spannungsspit zen zu vermeiden.

Mit dem zunehmenden Einsatz von Wärmepum pen in der Heiz- und Klimatechnik ist das Problem in sofern verstärkt worden, als zusätzlich zu den indu striellen Anwendern eine grosse Anzahl privater Haushalte das öffentliche Stromnetz durch übermä ssige Stromaufnahme für Wärme- und Klimageräte belasten.

In der Zeitschrift "Heizung Klima" Nr. 12/1984 Seite 72 wird das Problem der Einschalt-Strombe grenzung bei Kompressoren von Wärmepumpen be schrieben. Der Anlaufstrom solcher Kompressoren kann sich zusätzlich erhöhen, wenn der Kühlkreislauf beim Einschalten unter Druck steht, so dass der Mo tor den Kompressor gegen den vollen System-Druck beschleunigen muss.

Für Verbraucher mit niedriger Leistungsaufnah me, z.B. Staubsauger-Motoren und Haushaltsgeräte, ist es bereits bekannt, Heissleiter zur Einschaltstrom begrenzung zu verwenden. In der Schrift "Heissleiter zur Einschaltstrombegrenzung" der Siemens AG vom November 1987 werden derartige Heissleiter be schrieben. Dabei wird der Fachmann auf Seite 3 der Schrift angewiesen, zunächst den geforderten Dau erstrom des Verbrauchers zu bestimmen und daraus den Nennwiderstand des Heissleiters zu berechnen.

Typischerweise bleibt nämlich ein solcher Heiss leiter während des Betriebs in Serie zum Verbraucher geschaltet.

Aus der FR-A-2 440 727 und der DE-A-28 48 281 ist eine Steuervorrichtung für einen in Geschirrspül maschinen eingesetzten Umwälzpumpenmotor be kannt. Bei dieser Steuervorrichtung fliesst beim Ein schalten der maximale Strom in Haupt- und Hilfswick lung des Motors. Danach wird ein NTC-Widerstand in Reihe vor Hilfs- und/oder Hauptwicklung geschaltet, um die zu grosse Pumpleistung zu reduzieren. Der NTC-Widerstand wird zu einem späteren Zeitpunkt wieder überbrückt. Der NTC-Widerstand dient dabei nicht der Begrenzung der Begrenzung des Stroms im Einschaltaugenblick.

Es ist offensichtlich, dass der Einsatz derartiger NTC-Widerstände auf Verbraucher mit niedriger Stromaufnahme, und zwar sowohl hinsichtlich des Maximalstroms als auch des Dauerstroms begrenzt ist.

Das Problem des "sanften" Abschaltens ist vor al lem im Zusammenhang mit Kältemaschinen bisher noch nicht angesprochen worden.

Der Erfindung liegt die Aufgabe zugrunde, die Nachteile des Bekannten zu vermeiden, insbesonde re also ein Verfahren und eine Vorrichtung zum Be grenzen von Stromspitzen beim Einschalten eines Wechselstrom-Verbrauchers, insbesondere eines Elektromotors, zu schaffen, das bei einfachstem Auf bau zuverlässig den "sanften Anlauf" des Verbrau chers, gewährleistet, Einschalt- und in einer bevor zugten Ausführung auch Ausschalt-Stromspitzen vermeidet und mit einem Minimum an Bauteilen aus kommt.

Erfindungsgemäss wird dies in erster Linie durch ein Verfahren bzw. eine Einrichtung gemäss kenn zeichnendem Teil von Anspruch 1 und Anspruch 9 er reicht. Die Erfindung schlägt dabei überraschender weise die Verwendung eines Heissleiters vor, der nicht entsprechend der vorstehend zitierten Dimen sionierungsvorschrift ausgelegt ist. Das heisst, der Heissleiter wird nicht entsprechend dem ermittelten Dauerstrom-Wert des Verbrauchers dimensioniert, sondern es wird ein Heissleiter eingesetzt, dessen Dauerleistungs-Wert weniger als ein Hundertstel sei ner Leistungsaufnahme während des Einschaltens des Verbrauchers beträgt. Damit lassen sich Heissleiter (NTC-Widerstände), die an sich für die Ein-schalt strombegrenzung von Verbrauchern mit kleiner Lei stungsaufnahme wie Staubsaugern vorgesehen sind, erfindungsgemäss zur Einschaltstrombegrenzung von Antriebsaggregaten für Kältemaschinen mit einer Dauerstrombelastung von z.B. 20 A und Einschalt Stromspitzen von 80 A einsetzen. Nach dem erfin dungsgemäßen Verfahren wird diese der technischen Lehre am Anmeldungstag widersprechende Verwen dung unter anderen dadurch ermöglicht, dass einer seits der Strom durch den Heissleiter und den Ver braucher im Nulldurchgang der Wechselstrom-Quelle eingeschaltet wird. Dadurch wird ein definierter Stromanstieg gewährleistet. Der Heissleiter und die Schalteinrichtung werden nach Erreichen des Nenn betriebs durch einen Leistungsschalter überbrückt, so dass der NTC-Widerstand im Betrieb nicht belastet wird. Ueberraschenderweise hat sich nun gezeigt, dass auch bei einer scheinbaren Ueberbelastung des NTC-Widerstands im Einschalt-Moment der Wider standswert des NTC derart schnell absinkt, dass die wirksame Strombegrenzung gleichzeitig mit dem An stieg des Innenwiderstands des Verbrauchers ab nimmt. Der NTC-Widerstand schützt sich quasi selbst vor Zerstörung. Durch die Ueberbrückung mittels des Leistungsschalters und gleichzeitiges Ausschalten der Schalteinrichtung kann der NTC je nach Verbrau cher meist innerhalb von einigen Hundert Millisekun

den vom NTC-Widerstand getrennt werden, bevor dieser zerstört wird.

Der Heissleiter kann dann während des Dauerbetriebs wieder abkühlen, bis beim Ausschalten der Leistungsschalter geöffnet, der Verbraucher wieder kurze Zeit durch die Schalteinrichtung und den Heissleiter gespeist wird, wobei der Widerstandswert des kalten Heissleiters das lastfreie Abschalten des Verbrauchers zusätzlich unterstützt. Besonders einfach lässt sich die Erfindung realisieren, wenn die Schalteinrichtung ein Halbleiter-Schalter, insbesondere ein Thyristor-Schalter ist, wobei durch Parallelschalten eines Widerstands während des Abschaltvorgangs die Mindest-Zündspannung erzeugt wird. Dies lässt sich mit minimalem Schaltaufwand vor allem realisieren, wenn der Leistungsschalter durch einen Kontakt-Schutzschalter überbrückt wird, zu dem ein Widerstand in Serie geschaltet ist. Nach dem Oeffnen des Leistungsschalters ergibt sich ein der Zündspannung entsprechender Spannungsabfall an diesem Widerstand, so dass der Halbleiterschalter durchschaltet und den Abschaltvorgang übernimmt. Besonders einfach lässt sich dies realisieren, wenn der Widerstand zur Erzeugung der Mindest-Zündspannung ein Kaltleiter ist. Nach dem Zuschalten steigt die Temperatur des Kaltleiters durch den Stromfluss zunehmend an, wobei gleichzeitig der Widerstandswert steigt. Dementsprechend nimmt der Spannungsabfall zu, bis die Zündspannung des Thyristors erreicht ist. Sobald der Thryristor durchgeschaltet hat, steigt der Strom durch den Heissleiter, dessen Widerstandswert mit zunehmendem Stromfluss bzw. zunehmender Erwärmung abnimmt. Jetzt kann der Thyristor im Nulldurchgang abgeschaltet werden, ohne dass dabei die Kontakte des Leistungsschalters durch Abreissfunken beschädigt werden oder Spannungsspitzen erzeugt werden.

Besonders vorteilhaft lässt sich die Erfindung auch zum Einschalten von zwei oder mehreren Motoren zum Antreiben einer Wärmepumpen-Anlage verwenden. Dabei kann jedem Motor eine erfindungsgemässe Anordnung aus Heissleiter und Schalteinrichtung vorgeschaltet sein, wobei die Schalteinrichtungen derart verzögert nacheinander eingeschaltet werden, dass der zweite oder nächstfolgende Motor in einem Nulldurchgang zugeschaltet wird, nachdem der erste bzw. der vorhergehende Motor bereits mehr als die Hälfte, jedoch weniger als 80 % des maximalen Anlaufstroms erreicht hat. Beim Inbetriebnehmen derartiger Anlagen müssen beide Motoren praktisch gleichzeitig anlaufen, wodurch mit dem Einschaltvorgang des zweiten Motors nicht abgewartet werden kann, bis der erste Motor im Dauerbetrieb bei Nennstrom-Aufnahme läuft. Um trotzdem den Einschaltstrom zu reduzieren sieht die Erfindung vor, dass der zweite Motor zugeschaltet wird, bevor der erste die maximale Stromaufnahme erreicht hat. Dadurch wird gewährleistet, dass der zweite Motor den maximalen Anlaufstrom aufnimmt, wenn der erste Motor bereits angelaufen ist und sich der Nennstromaufnahme nähert. Dies garantiert einerseits quasi gleichzeitigen Anlauf und gewährleistet andererseits, dass die maximalen Anlaufströme zeitlich versetzt auftreten.

Insgesamt schafft die Erfindung eine einfache, zuverlässige Vorrichtung zum Begrenzen von Stromspitzen, wobei besonders vorteilhaft ist, dass der Anlauf mit Vollwellen, d.h. ohne Phasenanschnittsteuerung ermöglicht wird, was auch zu ruckfreiem Anlauf von Motoren führt.

Die Erfindung ist im folgenden in Ausführungsbeispielen anhand der Zeichnungen näher erläutert. Es zeigen:

Figur 1 die schematische Darstellung einer Schaltungsanordnung mit den Merkmalen der Erfindung,
Figur 2 eine Schaltungsanordnung zum Speisen von zwei Motoren,
Figur 3 den Verlauf des Einschaltstroms bei der Anordnung gemäss Figur 1,
Figur 4 den Verlauf des Einschaltstroms bei der Anordnung gemäss Figur 2, und
Figur 5 den zeitlichen Ablauf der verschiedenen Schaltvor gänge.

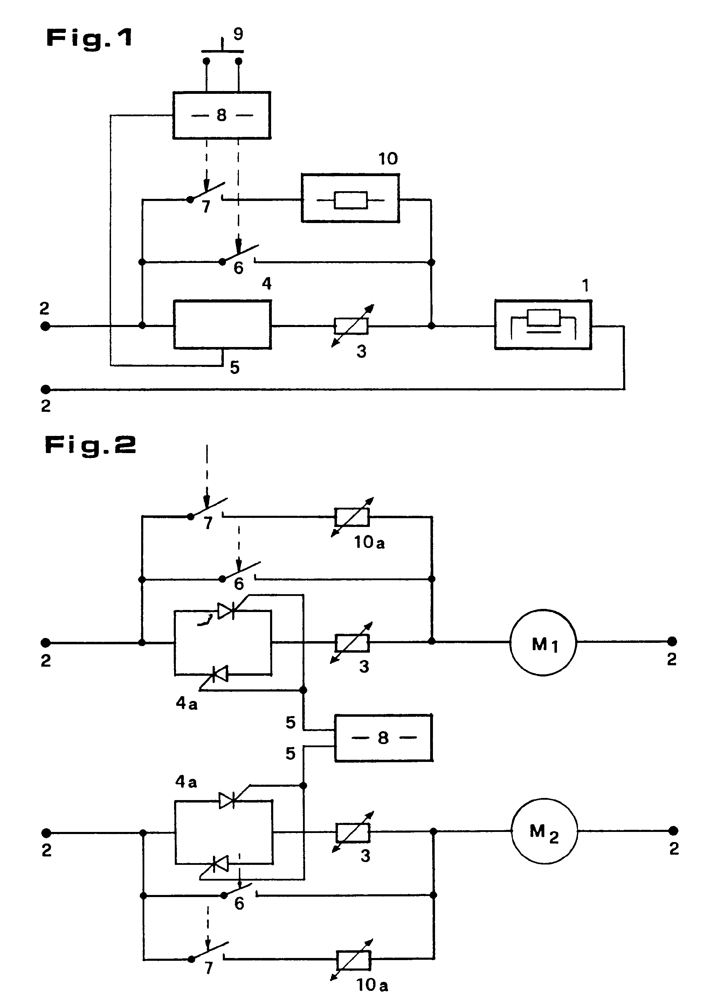

Gemäss Figur 1 wird ein induktiver Verbraucher 1 durch Klemmen 2 mit Wechselstrom versorgt. In Serie zum Verbraucher 1 ist ein Heissleiter 3 geschaltet, dem eine Schalteinrichtung 4 vorgeschaltet ist. Die Schalteinrichtung 4 weist einen Steuereingang 5 auf und kann beim Anliegen eines Steuerbefehls exakt im Nulldurchgang des anliegenden Wechselstroms eingeschaltet werden. Derartige Schalteinrichtungen, die z.B. mit Halbleitern wie Thyristoren oder Triac's arbeiten, sind bekannt und gebräuchlich und müssen hier nicht näher erläutert werden.

Parallel zur Schalteinrichtung 4 ist ein Leistungsschalter 6 geschaltet, der wiederum durch einen Kontaktschutzschalter 7 überbrückbar ist. Leistungsschalter 6 und Kontaktschutzschalter 7 können durch eine Steueranordnung 8 aktiviert werden, die auch mit dem Steuereingang 5 der Schalteinrichtung 4 verbunden ist. Zum Einschalten des Verbrauchers 1 wird ein Druckschalter 9 betätigt, welcher die Steueranordnung 8 aktiviert. Diese schaltet die Schalteinrichtung 4 im Nulldurchgang des Versorgungsstroms ein. Der Heissleiter 3 hat Raumtemperatur und weist dementsprechend einen relativ hohen Widerstand auf. Der Spannungsabfall am Heissleiter 3 ist deshalb relativ hoch - der Einschaltstrom wird wirksam begrenzt. Mit der Erwärmung des Heissleiters 3 sinkt dessen Widerstandswert ab, der Verbraucher 1 wird langsam zugeschaltet und erreicht Nennstrom ohne dass der Einschaltstrom übermässig ansteigen kann.

Jetzt wird durch die Steueranordnung 8 der Leistungsschalter 6 geschlossen, wodurch der Heissleiter 3 und die Schalteinrichtung 4 spannungslos werden. Der Heissleiter 3 kann sich abkühlen. Ersichtlicherweise ist der Heissleiter 3 nur für eine derart kurze Zeitspanne in der Schaltung aktiv, dass er unterdimensioniert werden kann. Versuche haben überraschenderweise ergeben, dass Heissleiter mit einem Dauerleistungs-Wert von 4,5 Watt mit einer Leistung von ca. 2 Kilowatt während des Einschaltens belastet werden können. Diese Widerstände mit 1 Ohm Nennwiderstand können also durchaus wirksam zur Begrenzung von Einschaltströmen von 80 A eingesetzt werden, sofern sie in der erfindungsgemässen Anordnung geschaltet sind. Bewährt hat sich dabei z.B. eine Serienschaltung von 6 Widerständen der Type S 3363/1,0/M der Firma Siemens. Der Anfangswiderstand von 1 Ohm sinkt nach dem Einschalten schnell auf ca. 0,3 Ohm ab. Dabei steigt der Strom auf ca. 80 A an. Die Leistungsaufnahme beträgt nach der Formel $N = J^2 \times R$ etwa $80^2 . 0,3$ oder ca. 2000 Watt.

Nach dem Zuschalten des Leistungsschalters 6 wird durch die Steuereinrichtung 8 nun noch der Kontaktschutzschalter 7 eingeschaltet, zu dem ein veränderlicher Widerstand 10 in Serie geschaltet ist.

Soll nun der Verbraucher 1 abgeschaltet werden, wird wiederum der Druckschalter 9 betätigt, welcher die Steueranordnung 8 aktiviert und dabei folgende Schaltvorgänge auslöst: Zunächst wird der Leistungsschalter 6 geöffnet. Da die Schalteinrichtung 4 noch abgeschaltet ist, fliesst der Strom zum Verbraucher 1 über den Kontaktschutzschalter 7 und den Widerstand 10. Der Spannungsabfall am Widerstand 10 liegt auch am Heissleiter 3 und der Schalteinrichtung 4 an, so dass letztere durch Ansteuerung des Steuereingangs 5 eingeschaltet werden kann. Gleichzeitig wird der Widerstand 10 durch eine geeignete Steuereinrichtung erhöht, so dass die Stromversorgung des Verbrauchers 1 durch die Schalteinrichtung 4 und den Heissleiter 3 übernommen wird. Der Widerstandswert des kalten Heissleiters 3 begrenzt den Stromfluss durch den Verbraucher 1. Jetzt kann durch entsprechenden Steuerbefehl am Steuereingang 5 die Schalteinrichtung 4 im Nulldurchgang der Stromversorgung abgeschaltet werden, wobei Spannungs- und/oder Stromspitzen vermieden werden.

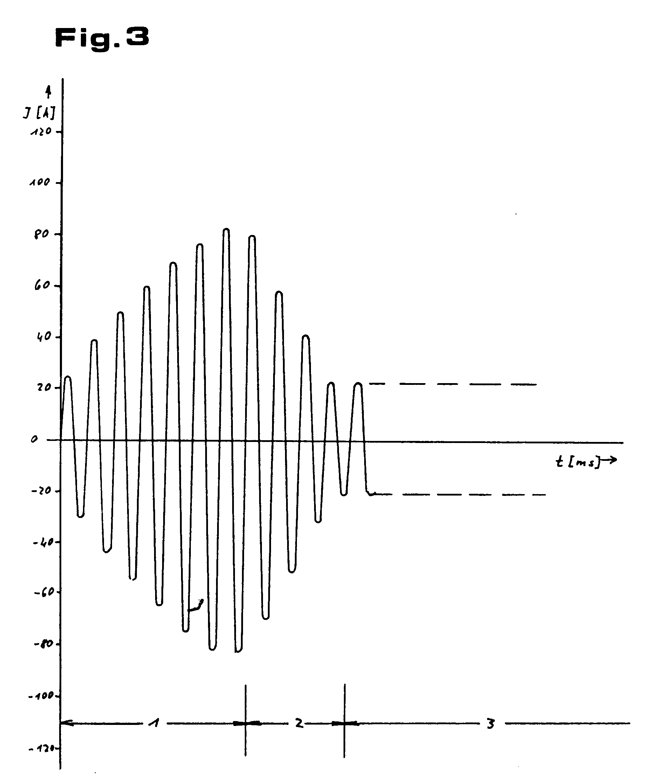

In Figur 3 ist die Stromaufnahme des Verbrauchers 1 während des Einschaltvorgangs dargestellt. Zunächst erfolgt ein weicher Stromanstieg während sechs Perioden des Netzstroms, bis der maximale Einschaltstrom erreicht ist, welcher durch den Heissleiter 3 begrenzt wird. Während der Phase 2 stellt sich am Verbraucher 1 zunehmend Nennstrom ein, bis etwa nach Ablauf von Phase 2 der Heissleiter 3 abgeschaltet werden kann. Der Verbraucher 1 hat jetzt Phase 3, d.h. Nennbetrieb, erreicht.

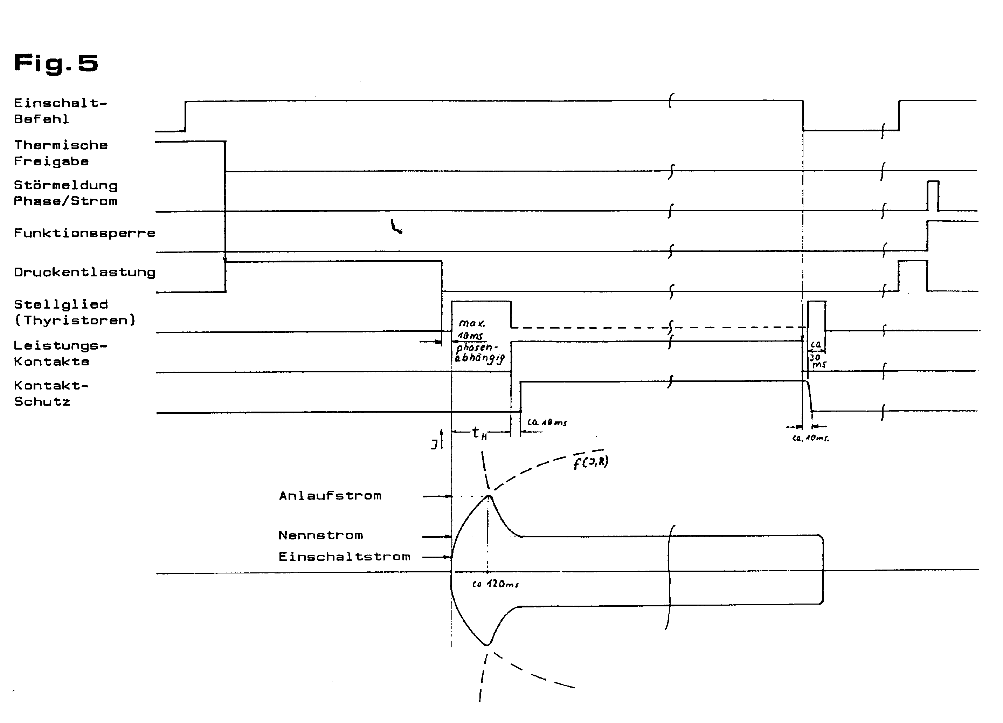

Figur 2 zeigt eine Anordnung analog Figur 1 zur Speisung von zwei Kompressor-Motoren M1 und M2, die eine Wärmepumpe antreiben. Die Schalteinrichtung 4 gemäss Figur 1 ist als Thyristor-Schaltung 4a ausgebildet. Der veränderliche Widerstand 10 gemäss Figur 1 ist als Kaltleiter 10a ausgebildet. Im übrigen entspricht die Schaltung dem Ausführungsbeispiel gemäss Figur 1. Der Betriebsablauf der Anordnung ist im Zusammenhang mit Figur 5 erläutert: Zunächst wird über den Druckschalter 9 ein Einschaltbefehl an der Steueranordnung 8 erzeugt. Diese überprüft über eine nicht dargestellte Kontrollanordnung, ob der Heissleiter 3 ausreichend abgekühlt ist, um seine Funktion zu erfüllen. Sobald in der Steueranordnung 8 die thermische Freigabe erfolgt, wird ein Druckentlastungsbefehl an den Kühlmittelkreislauf der Wärmepumpe abgegeben, um die Belastung der Kompressoren während des Anlaufens zu reduzieren. Nach einer bestimmten Zeitspanne gibt die Steueranordnung 8 einen Schaltbefehl an die Thyristor-Schaltung 4a für den Motor M1. Der Thyristor 4a schaltet im Phasen-Nulldurchgang ein. Der Einschaltstrom I steigt während sechs Perioden, d.h. 120 Millisekunden an, wobei der Innenwiderstand des Motors M1 während des Anlaufs zunimmt, während der Widerstand des Heissleiters 3 mit zunehmender Erwärmung abnimmt. Jetzt werden die Leistungskontakte des Leistungsschalters 6 geschlossen, die Spannung über der Thyristor-Schaltung 4a und dem Heissleiter 3 bricht auf Null zusammen. Der Motor hat seinen Nennbetrieb erreicht. Verzögert wird jetzt noch der Kontaktschutzschalter 7 geschlossen.

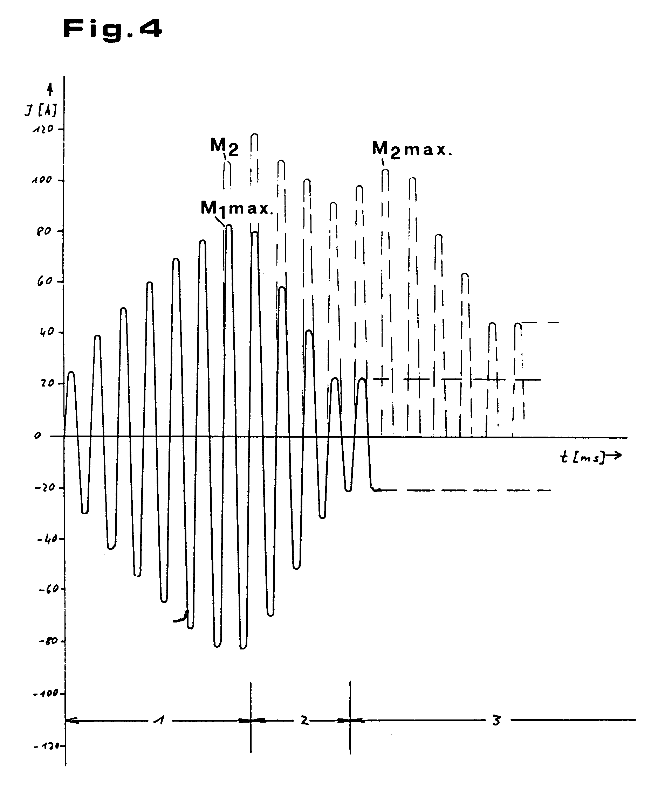

Um den Motor M2 möglichst gleichzeitig zu starten, wird durch die Steueranordnung 8 die gleiche Serie von Steuerbefehlen an die dem Motor M2 vorgeschaltete Einrichtung abgegeben. Um dabei jedoch den Einschaltstrom nicht zu verdoppeln, wird der Motor M2 mit einer Zeitverzögerung zugeschaltet, die aus Figur 4 ersichtlich ist: Danach wird die Thyristor-Schaltung 4a für den Motor M2 erst eingeschaltet, wenn der Einschaltstrom für M1 bereits 100% des Maximalwerts erreicht hat. Dementsprechend geht der Einschaltstrom von M1 bereits wieder gegen den Nennwert, wenn M2 den Maximalwert erreicht. Die von M1 und M2 bewirkte Strombelastung des Netzes ist deshalb nicht der doppelte Wert des Einschaltstroms eines Motors, sondern nur etwa der anderthalbfache Wert, obwohl beide Motoren beinahe gleichzeitig anlaufen. In bestimmten Anwendungsfällen kann sich auch eine vorteilhafte Ueberlagerung der Anlaufstrom-Werte ergeben, wenn der zweite Motor M2 eingeschaltet wird, bevor der erste Motor 80% des Maximalwerts erreicht hat. In diesem Fall ist der Anlauf der beiden Motoren noch enger synchronisiert, ohne dass der doppelte Wert des Anlaufstroms auftreten würde.

Selbstverständlich lassen sich statt der dargestellten Schalter auch andere Schaltelemente, z.B. mechanische oder elektronische Schalter verwenden. Die Anordnung eignet sich besonders für den Einsatz im Zusammenhang mit Motoren für Kompressorantriebe, insbesondere für Drehstrommotoren und Kompressoren mit geringer Masse, deren Trägheitsmoment gering ist und die deshalb schnell auf Betriebsdrehzahl kommen, so dass der Nennbetrieb schnell erreicht wird. Selbstverständlich ist die Erfindung aber nicht auf solche Anwendungen beschränkt und es lassen sich insbesondere nicht nur induktive, sondern auch kapazitive Verbraucher damit ein- und ausschalten.

**Patentansprüche**

1. Einrichtung zum Begrenzen der Stromaufnahme eines Asynchron-Wechselstrom-Motors 1, ($M_1$, $M_2$), der durch eine Schalteinrichtung (4, 4a) an Spannung legbar ist, mittels eines Heissleiters (3) der in Serie zum Motor geschaltet und durch einen Leistungsschalter (6) überbrückbar ist, dadurch gekennzeichnet, dass der Motor (1, $M_1$, $M_2$) der Heissleiter (3) und der Leistungsschalter (6) derart geschaltet sind, dass der Heissleiter (3) zur Begrenzung von Stromspitzen bei Beginn des Einschaltvorgangs wirksam in Serie zum Motor geschaltet und nach Abschluss der Einschaltphase durch den Leistungsschalter (6) überbrückt ist, und dass der Heissleiter eine zulässige Dauerleistung von weniger als 1/100 seiner Leistungsaufnahme während des Einschaltens des Motors aufweist.

2. Einrichtung nach Anspruch 1, dadurch gekennzeichnet, dass eine Schalteinrichtung (4, 4a) vorgesehen ist, die im Nulldurchgang der Stromquelle abschaltbar ist.

3. Einrichtung nach Anspruch 1 oder 2, dadurch gekennzeichnet, dass der Leistungsschalter (6) durch einen Kontaktschutzschalter (7) überbrückbar ist.

4. Einrichtung nach einem der Ansprüche 1 bis 3, dadurch gekennzeichnet, dass die Schalteinrichtung (4, 4a) eine Halbleiter-Schaltanordnung (4a) mit einer Mindest-Zündspannung aufweist, und dass eine Widerstandsanordnung (10) parallel zur Halbleiter-Schaltanordnung schaltbar ist, deren Widerstandswert einen Spannungsabfall wenigstens in Höhe der Mindest-Zündspannung erzeugt.

5. Einrichtung nach einem der Ansprüche 1 bis 3, dadurch gekennzeichnet, dass eine Steueranordnung (8) zum Ansteuern der Schalteinrichtung (4, 4a) im Nulldurchgang der Stromquelle vorgesehen ist.

6. Einrichtung nach einem der Ansprüche 1 bis 4, dadurch gekennzeichnet, dass eine Steueranordnung (8) zum zeitabhängigen Zuschalten bzw. Abschalten von Leistungsschalter (6) und/oder Kontaktschutzschalter (7) vorgesehen ist.

7. Einrichtung nach einem der Ansprüche 1 bis 5 zum Einschalten von wenigstens zwei Motoren zum Antreiben einer Wärmepumpen-Anlage, dadurch gekennzeichnet, dass jedem Motor ($M_1$, $M_2$) eine Anordnung aus Heissleiter (3) und Schalteinrichtung (4, 4a) vorgeschaltet ist, und dass die Schalteinrichtungen (4, 4a) derart verzögert nacheinander eingeschaltet werden, dass der zweite oder der nächstfolgende Motor in einem Nulldurchgang der Stromquelle zugeschaltet wird, nachdem der erste bzw. der vorhergehende Motor mehr als die Hälfte, jedoch bevor er 100% des maximalen Anlaufstroms erreicht hat.

8. Einrichtung nach Anspruch 7, dadurch gekennzeichnet, dass die Schalteinrichtungen (4, 4a) derart verzögert nacheinander eingeschaltet werden, dass der zweite oder nächstfolgende Motor ($M_2$) zugeschaltet wird, bevor er mehr als 80% des maximalen Anlaufstroms erreicht hat.

9. Verfahren zum Begrenzen von Stromspitzen beim Einschalten eines Wechselstrom-Asynchron-Motors mit Scheinwiderstand mittels einer Einrichtung gemäss einem der Ansprüche 1 bis 8, dadurch gekennzeichnet, dass beim Einschalten mittels der Schalteinrichtung (4, 4a) der Strom durch den Heissleiter (3) im Nulldurchgang der Stromquelle eingeschaltet wird und dass bei oder nach Erreichen des Nennbetriebs die Schalteinrichtung (4, 4a) und der Heissleiter (3) durch einen Leistungsschalter (6) überbrückt werden.

10. Verfahren nach Anspruch 9, dadurch gekennzeichnet, dass beim Ausschalten der Leistungsschalter (6) geöffnet, der Motor (1, $M_1$, $M_2$) durch die Schalteinrichtung (4, 4a) und den Heissleiter (3) gespeist und sodann der Strom im Nulldurchgang der Stromquelle abgeschaltet wird.

11. Verfahren nach Anspruch 9 oder 10, dadurch gekennzeichnet, dass nach dem Einschalten des Leistungsschalters (6) dieser durch einen Kontaktschutzschalter (7) überbrückt wird.

12. Verfahren nach einem der Ansprüche 9 bis 11 mit einer Halbleiter-Schaltung als Schalteinrichtung (4a) mit einer Mindest-Zündspannung, dadurch gekennzeichnet, dass nach dem Abschalten des Leistungsschalters (6) die Mindest-Zündspannung über der Schalteinrichtung erzeugt wird.

13. Verfahren nach Anspruch 12, dadurch gekennzeichnet, dass die Mindest-Zündspannung durch einen Serienwiderstand (10, 10a) zum Kontaktschutzschalter (7) oder zum Leistungsschalter (6), insbesondere durch einen Kaltleiter (10a) erzeugt wird.

14. Verwendung eines Heissleiters zum Begrenzen von Schaltstrom-Spitzen eines induktiven Verbrauchers mit einem Scheinwiderstand, insbesondere eines Elektromotors, vor dem Erreichen des Maximalstroms im Verlauf des Stromanstiegs ab dem Beginn des Einschaltvorgangs und während der Einschaltphase, wobei der Heissleiter (3) einen zulässigen Dauerleistungs-Wert von weniger als 1/100 seiner Leistungsaufnahme während des Einschaltens des Verbrauchers aufweist und wobei der Heissleiter (3) durch einen Leistungsschalter (6) im Normalbetrieb überbrückbar ist.

15. Verwendung nach Anspruch 14 mit einer Serienschaltung des Heissleiters (3) und einer im Phasen-Nulldurchgang der Stromquelle einschaltbaren bzw. ausschaltbaren Schalteinrichtung (4, 4a).

## Claims

1. Apparatus for limiting the current consumption of an asynchronous alternating current motor (1, $M_1$, $M_2$) which can be applied to voltage by a switch device (4, 4a), by means of a negative temperature coefficient resistor (3) which is connected in series with the motor and which can be by-passed by a power switch (6), characterised in that the motor (1, $M_1$, $M_2$), the negative temperature coefficient resistor (3) and the power switch (6) are so connected that the negative temperature coefficient resistor (3) is operatively connected in series with the motor to limit current peaks at the beginning of the switch-on phase and is by-passed after termination of the switch-on phase by the power switch (6), and that the negative temperature coefficient resistor has an admissible continuous rating of less than 1/100 of its power consumption during switching-on of the motor.

2. Apparatus according to claim 1 characterised in that there is provided a switch device (4, 4a) which can be switched off at the passage through zero of the current source.

3. Apparatus according to claim 1 or claim 2 characterised in that the power switch (6) can be by-passed by a contact protection switch (7).

4. Apparatus according to one of claims 1 to 3 characterised in that the switch device (4, 4a) is a semiconductor switch arrangement (4a) with a minimum trigger voltage and that a resistance arrangement (10) can be connected in parallel to the semiconductor switch arrangement, the resistance thereof producing a voltage drop at least of the level of the minimum trigger voltage.

5. Apparatus according to one of claims 1 to 3 characterised in that a control arrangement (8) is provided for actuation of the switch device (4, 4a) at the passage through zero of the current source.

6. Apparatus according to one of claims 1 to 4 characterised in that a control arrangement (8) is provided for switching the power switch (6) and/or the contact protection switch (7) on and off in a time-dependent fashion.

7. Apparatus according to one of claims 1 to 5 for switching on at least two motors for driving a heat pump installation, characterised in that an arrangement comprising a negative temperature coefficient resistor (3) and a switch device (4, 4a) is connected upstream of each motor ($M_1$, $M_2$), and that the switch devices (4, 4a) are switched on with a delay in succession in such a way that the second or next following motor is switched on at a passage through zero of the current source after the first or the preceding motor has reached more than half but before it has reached 100% of the maximum starting current.

8. Apparatus according to claim 7 characterised in that the switch devices (4, 4a) are switched on with a delay in succession in such a way that the second or next following motor ($M_2$) is switched on before it has reached more than 80% of the maximum starting current.

9. A method of limiting current peaks when switching on an alternating current asynchronous motor with impedance by means of an apparatus according to one of claims 1 to 8 characterised in that when switching on is effected by means of the switch device (4, 4a) the current is switched on through the negative temperature coefficient resistor (3) at the passage through zero of the current source and that when or after the nominal operating condition is reached the switch device (4, 4a) and the negative temperature coefficient resistor (3) are by-passed by a power switch (6).

10. A method according to claim 9 characterised in that in the switching-off phase the power switch (6) is opened, the motor (1, $M_1$, $M_2$) is supplied by the switch device (4, 4a) and the negative temperature coefficient resistor (3) and then the current is switched off at the passage through zero of the current source.

11. A method according to claim 9 or claim 10 characterised in that after the power switch (6) is switched on it is by-passed by a contact protection switch (7).

12. A method according to one of claims 9 to 11 with a semiconductor circuit as the switch device (4a) with a minimum trigger voltage characterised in that after the power switch (6) is switched off the minimum trigger voltage is produced by way of the switch device.

13. A method according to claim 12 characterised in that the minimum trigger voltage is produced by a series resistor (10, 10a) relative to the contact protection switch (7) or the power switch (6), in particular by a positive temperature coefficient resistor (10a).

14. Use of a negative temperature coefficient resistor for limiting switching current peaks of an inductive load with an impedance, in particular an electric motor, prior to the attainment of the maximum current in the course of the current rise from the beginning of the switching-on procedure and during the switching-on phase, wherein the negative temperature coefficient resistor (3) has an admissible continuous rating value of less than 1/100 of its power consumption during the switching-on of the load and wherein the negative temperature coefficient resistor (3) can be by-passed in the normal operating condition by a power switch (6).

15. Use according to claim 14 with a series circuit of the negative temperature coefficient resistor (3) and a switch device (4, 4a) which can be switched on and off in the passage through zero in respect of phase of the current source.

## Revendications

1. Dispositif pour limiter la consommation de courant d'un moteur à courant alternatif asynchrone 1, (M₁, M₂) qui est apte à être mis sous tension grâce à un dispositif de commutation (4, 4a), à l'aide d'un thermistor NTC (3) qui est monté en série par rapport au moteur et apte à être court-circuité par un interrupteur de puissance (6), caractérisé en ce que le moteur (1, M₁, M₂), le thermistor NTC (3) et l'interrupteur de puissance (6) sont montés de telle sorte que le thermistor NTC (3) est monté en série par rapport au moteur de façon active pour limiter des pointes de courant au début de la mise en circuit, et est court-circuité par l'interrupteur de puissance (6) après achèvement de la phase de mise en circuit, et en ce que le thermistor NTC possède une puissance continue autorisée de moins de 1/100 de sa puissance absorbée pendant la mise en circuit du moteur.

2. Dispositif selon la revendication 1, caractérisé en ce qu'il est prévu un dispositif de commutation (4, 4a) qui est apte à être mis hors circuit au passage par zéro de la source de courant.

3. Dispositif selon la revendication 1 ou 2, caractérisé en ce que l'interrupteur de puissance (6) est apte à être court-circuité par un commutateur de protection de contact (7).

4. Dispositif selon l'une des revendications 1 à 3, caractérisé en ce que le dispositif de commutation (4, 4a) possède un mécanisme de commutation à semi-conducteur (4a) à tension d'amorçage minimale, et en ce qu'un dispositif de résistance (10) est apte à être monté en parallèle par rapport au mécanisme de commutation à semi-conducteur, dont la valeur de résistance produit une chute de tension au moins égale à la tension d'amorçage minimale.

5. Dispositif selon l'une des revendications 1 à 3, caractérisé en ce qu'il est prévu un dispositif de commande (8) pour commander le dispositif de commutation (4, 4a) au passage par zéro de la source de courant.

6. Dispositif selon l'une des revendications 1 à 4, caractérisé en ce qu'il est prévu un dispositif de commande (8) pour la mise en circuit ou hors circuit, en fonction du temps, de l'interrupteur de puissance (6) et/ou du commutateur de protection de contact (7).

7. Dispositif selon l'une des revendications 1 à 5 pour la mise en circuit d'au moins deux moteurs destinés à entraîner une installation de pompe à chaleur, caractérisé en ce qu'il est prévu, monté en amont de chaque moteur (M₁, M₂), un dispositif formé d'un thermistor NTC (3) et d'un dispositif de commutation (4, 4a), et en ce que les dispositifs de commutation (4, 4a) sont mis en circuit successivement de façon retardée de telle sorte que le second moteur ou le moteur suivant est mis en circuit dans un passage par zéro de la source de courant après que le premier moteur ou le moteur précédent a atteint plus de la moitié du courant initial maximal, mais avant qu'il ait atteint 100 % de celui-ci.

8. Dispositif selon la revendication 7, caractérisé en ce que les dispositifs de commutation (4, 4a) sont mis en circuit successivement de façon retardée de telle sorte que le second moteur ou le moteur suivant (M₂) est mis en circuit avant d'avoir atteint plus de 80 % du courant initial maximal.

9. Procédé pour limiter des pointes de courant lors de la mise en circuit d'un moteur asynchrone à courant alternatif à résistance apparente, à l'aide d'un dispositif selon l'une des revendications 1 à 8, caractérisé en ce que, lors de la mise en circuit à l'aide du dispositif de commutation (4, 4a), le courant est mis en circuit par le thermistor NTC (3) au passage par zéro de la source de courant, et en ce que, quand le régime nominal est ou a été atteint, le dispositif de commutation (4, 4a) et le thermistor NTC (3) sont court-circuités par un interrupteur de puissance (6).

10. Procédé selon la revendication 9, caractérisé en ce que, lors de la mise hors circuit, l'interrupteur de puissance (6) s'ouvre, le moteur (1, $M_1$, $M_2$) est alimenté par le dispositif de commutation (4, 4a) et le thermistor NTC (3), puis le courant est mis hors circuit dans le passage par zéro de la source de courant.

11. Procédé selon la revendication 9 ou 10, caractérisé en ce que, après la mise en circuit de l'interrupteur de puissance (6), celui-ci et court-circuité par un commutateur de protection de contact (7).

12. Procédé selon l'une des revendications 9 à 11, comportant un circuit à semi-conducteur comme dispositif de commutation (4a) à tension d'amorçage minimale, caractérisé en ce que, après la mise hors circuit de l'interrupteur de puissance (6), la tension d'amorçage minimale est produite par l'intermédiaire du dispositif de commutation.

13. Procédé selon la revendication 12, caractérisé en ce que la tension d'amorçage minimale est produite par une résistance en série (10, 10a) par rapport au commutateur de protection de contact (7) ou à l'interrupteur de puissance (6), en particulier par un thermistor PTC (10a).

14. Utilisation d'un thermistor NTC pour limiter des pointes de courant de commutation d'un consommateur inductif à résistance apparente, en particulier d'un moteur électrique, avant que le courant maximal ne soit atteint, lors de l'augmentation du courant, à partir du début de la mise en circuit et pendant la phase de mise en circuit, le thermistor NTC (3) possédant une valeur de puissance continue autorisée inférieure à 1/100 de sa puissance absorbée pendant la mise en circuit du consommateur, et ledit thermistor NTC (3) étant apte à être court-circuité, en régime normal, par un interrupteur de puissance (6).

15. Utilisation selon la revendication 14, avec un montage en série du thermistor NTC (3) et un dispositif de commutation (4, 4a) apte à être mis en circuit ou hors circuit dans le passage par zéro de phase de la source de courant.

**Fig.1**

**Fig.2**

# Fig.3

Fig.4

# Fig.5

Einschalt-
Befehl

Thermische
Freigabe

Störmeldung
Phase/Strom

Funktionssperre

Druckentlastung

Stellglied
(Thyristoren)

max.
10ms
phasen-
abhängig

Leistungs-
Kontakte

Kontakt-
Schutz

ca. 10ms

$t_H$

ca 10ms.

$f(\vartheta,R)$

Anlaufstrom

Nennstrom

Einschaltstrom

ca 120ms

ca
30
ms

EP 0 395 589 B1